# EUROPEAN PATENT SPECIFICATION

(11) **EP 2 145 803 B1**
(45) Date of publication and mention of the grant of the patent: **23.10.2013**
(21) Application number: 08382028.2
(22) Date of filing: 18.07.2008
(51) Int. Cl.: B60R 21/231

(54) **Low volume driver airbag**
Fahrerairbag mit geringem Volumen
Airbag de conducteur de faible volume

(43) Date of publication of application: 20.01.2010
(73) Proprietor: Dalphi Metal España, S.A., 28006 Madrid (ES)
(72) Inventor: Ferreras Plaza, Cristina, 36213, Vigo, Pontevedra (ES); Pérez Lopez, Beatriz, 36213, Vigo, Pontevedra (ES); Sanz Lopez, Raúl, 36213, Vigo, Pontevedra (ES); Martin Manso, Jesús, 36213, Vigo, Pontevedra (ES)
(74) Representative: Mehnert, Bernhard

(56) References cited:
- DE-A1- 19 807 850
- DE-A1-102006 047 902
- FR-A- 2 824 029
- US-A- 5 312 132
- US-A- 5 482 318

## Description

### FIELD OF THE INVENTION

This invention refers to a driver airbag module and specifically to an airbag module with a bag adapted to the various needs of protecting the head and thorax of the driver, as defined in the preamble of claim 1.

### BACKGROUND OF THE INVENTION

DE 198 07 850 A1, which is considered as the closest prior art, discloses such an airbag module.

An airbag module basically consists of a folded bag that rapidly inflates through a gas produced by a generator when certain sensor devices detect a vehicle collision. This way the bag unfolds between the vehicle occupant and a part of the vehicle, protecting him during the collision.

Currently, there are numerous inflatable safety devices or airbags destined to cushion the impact of the driver in the event of a collision; especially if said collision occurs frontally. In these airbags, the bag normally consists of two round panels with a seam on the periphery.

In order to adapt driver airbag modules to the various shapes of drivers, the use of interior retention bands has been proposed, connected to the upper and lower panel, to control both the behaviour during unfolding and the form of the bag once inflated. The use of these retention bands can ensure that the shape of an inflated bag is suitable to protect vehicle occupants, as well as limit its volume preventing an inflated bag from injuring them. Some examples of bags with retention bands are described in patents GB 2 261 855 A and GB 2 310 835, EP 0 658 459 and EP 0 824 419.

In order to achieve the same objective, resources focused on controlling the unfolding process of, specifically, the upper panel has been proposed such as described in US 5,395,134 (for a passenger airbag module), EP 1 062 125, and FR 284 029 based on pleats connected through tearable seams.

A drawback to these solutions is that they do not adapt in the same way to the various parts of the occupant's body because the resources mentioned offer a limited capacity for controlling volume, pressure and shape of the bag.

Another drawback of these solutions is that they are highly dependent on the position of the bag.

Another drawback of these solutions is that they need large size bags and, therefore, high powered gas generators.

Another drawback of these solutions using retention bands is that the additional band material represents increased size of the bag when folded, which hinders its introduction in small casings.

This invention focuses on resolving these drawbacks.

### SUMMARY OF THE INVENTION

One objective of this invention is to provide a driver airbag module that easily adapts to its anthropomorphological characteristics and, specifically, that adapts to the various head and thorax protection requirements.

Another objective of this invention is to provide a driver airbag module that adapts to its anthropomorphic characteristics regardless of bag position during unfolding.

Another objective of this invention is to provide a driver airbag module that adapts to its anthropomorphic characteristics without requiring a large size bag and, therefore, a high power gas generator.

Another objective of this invention is to provide a driver airbag module that adapts to its anthropomorphic characteristics and requires less space when folded.

These and other objectives are achieved with a driver airbag module for cars according to claim 1.

In a preferential embodiment, the surface of the upper panel is greater than the lower panel (which is the surface of the starting panels, before forming the pleats). The result is a driver airbag module adapted to the various head and thorax protection requirements in which the greatest modifications of bag geometry produced by such pleats take place in the upper panel, which is destined to enter into contact with the driver.

In another preferential embodiment of this invention, the pleats have a radial orientation towards a hypothetical centre of the starting panel. The result is a driver airbag module adapted to the various head and thorax protection requirements thanks to its tulip shape, which is obtained with the pleats of the upper panel, mainly.

These and other characteristics and advantages of the invention shall be more clearly described in the detailed description of the embodiment of the invention provided below, for illustrative purposes and not limited and referenced in the attached drawings.

### DESCRIPTION OF THE FIGURES

Figure 1 is a schematic view of the lower panel of the airbag as per the preferential embodiment of this invention.
Figures 2c, 2b and 2a are schematic views of, respectively, the upper panel of the airbag based on a preferential embodiment of this invention, of the panel before forming the pleats and starting panel.
Figure 3a is a cross section view of the panel in Figure 2b through line A-A and Figure 3b is cross section view of the panel in Figure 2c through line B-B.
Figure 4 is a perspective schematic view of the airbag as per a preferential embodiment of this invention in unfolded state.
Figure 5 is a perspective schematic view that shows how the airbag unfolds as per a preferential embodiment of the invention adapted to the various head and thorax protection requirements.

### DETAILED DESCRIPTION OF THE INVENTION

The basic elements of a driver airbag module are an inflatable bag, a gas generator, a casing that serves as the primary body and support of the rest of components and a cover with one or more predetermined breakage lines so that, during the unfolding of the bag, it can be divided into flaps, that are secured to the casing and hence avoid detachments that may injure the driver of the vehicle.

The airbag module is secured to the vehicle steering wheel structure through, for example, a clip mechanism involving securing elements placed in a rigid plate of the module with reception elements placed on the car steering wheel. On the other hand, the airbag module is structure with the generator in a central position and the inflatable bag folded around it so that the unfold direction is sensibly perpendicular to the angle of the steering wheel ring.

This invention essentially affects the bag of the airbag module and therefore we shall solely refer to it.

Following the Figures one can see that bag 11 as per the embodiment of this invention consists of an upper panel 13 and a lower panel 15, of round shape and preferably circular that are connected via peripherical seams. The lower panel 15 has a central opening 17 for receiving gas from the generator.

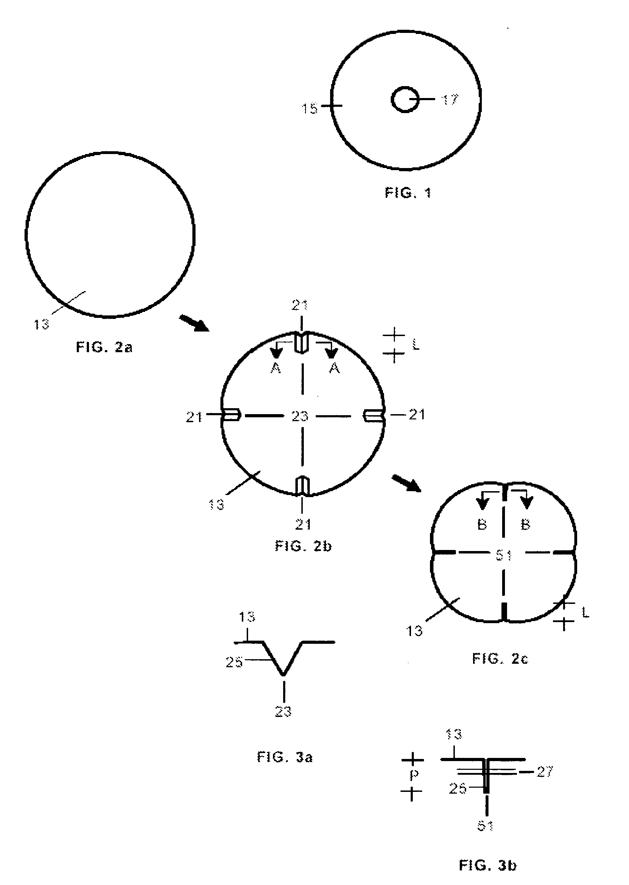

The upper panel 13 has four pleats 51 formed by joining the folds 23 with seams 27 in four peripherical areas 21 (Fig. 2b) of the upper starting panel 13 (Fig. 2a).

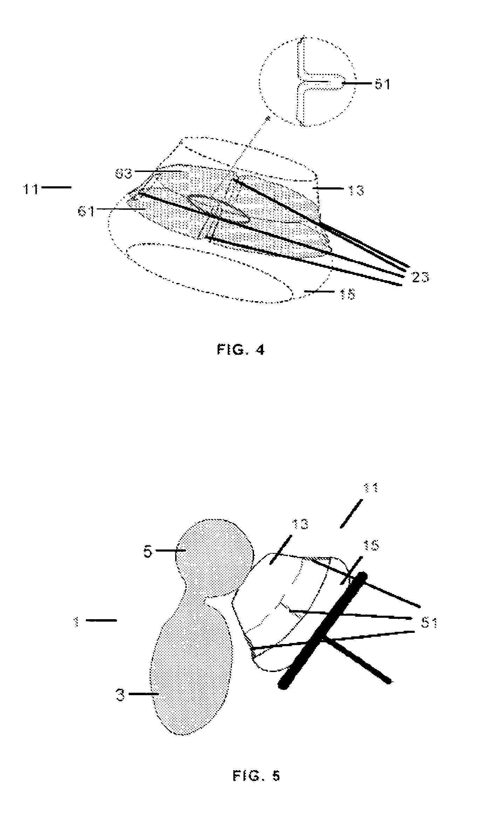

The upper starting panel 13 has a surface greater than the lower panel 15 but because of the aforementioned pleats 51 the contour length of the upper panel 13 is ultimately similar to the contour length of the lower panel 15 it is connected to, although its greater surface implies greater unfolding volume as illustrated in Figures 4 and 5, which perfectly show the different volume of the lower and upper parts of bag 11 in unfolded state.

Based on the typical round shape of the upper panels in airbag modules, either circular or oval shaped, the geometry of the upper part of the bag corresponding to upper panel 13 in unfolded state is defined by the number, direction, length and depth of pleats 51.

The Figures show a bag with 4 pleats 51 at a distance of 90° in between, placed in radial direction towards the hypothetical centre of the upper panel 13 formed by connecting folds 23 in triangular form with a length L and depth P; figure 3b particularly illustrates the length of walls 25 in folds 23, which forms the pleats 51.

With these characteristics and as illustrated in Figures 4 and 5, the upper part of the bag in unfolded state has a tronconic shape defined by surfaces 61, 63 delimited by pleats 51.

As can be seen particularly in Figure 5, this tronconic shape avoids premature contact of the bag 11 unfolded with the thorax 3 of the driver 1 and therefore achieves the proposed objective of adapting to the various thorax 3 and head 5 protection requirements.

In the preferential embodiment of the invention illustrated in the Figures and any other in which the surface of the upper panel is greater than the lower panel it is considered that the ratio between said surfaces ranges between 110% and 150%.

In the preferential embodiment of the invention illustrated in the Figures, the number of pleats in the upper panel is 4 and it is considered that in other preferential embodiments, the number of pleats per panel may range between 2 and 8.

With regards to length L of the pleats, it is considered that in the various embodiments of the invention, it can range between 5% and 20% of the panel radius.

With regards to depth P of the pleats, it is considered that in different embodiments of the invention, it can range between 2 and 10 cm.

Although several embodiments of the invention have been described and represented, it is obvious that modifications can be added included within its scope, which should not be limited to such embodiments, but to the content of the following claims.

## Claims

1. Driver airbag module for cars comprising a bag (11), formed by an upper panel (13) and a lower panel (15) joined through a peripheral seam, which expands an being supplied gas by a gas generator when the vehicle suffers a collision, wherein either both panels (13, 15) or only the upper panel (13) have one or more peripheral areas (21) with pleats (51) configured in such a way that the length of the contour is substantially similar to the other panel (15, 13),
**characterized in that**
said upper panel (13) and said lower panel (15) are of round shape and **in that** said pleats (51) in said one or more peripheral areas (21) are formed by connecting folds (23) in triangular form with side walls (25) having a length (L) and a depth (P),
and said pleats (51) being formed by additional seams (27) joining the side walls (25) of the folds (23).

2. Driver airbag module for cars as per claim 1, **characterized in that** the ratio between the surfaces of the upper and lower panels (13, 15) before forming the pleats (51) is between 110% and 150%.

3. Driver airbag module for cars as per any of the claims 1-2, **characterized in that** the number of pleats (51) in each panel (13, 15) ranges between 2 and 8.

4. Driver airbag module for cars as per any of the claims 1-3, **characterized in that** said pleats (51) have a radial orientation and length (L) between 5% and 20% of the hypothetical radius that defines its orientation.

5. Driver airbag module for cars as per any of the claims 1-4, **characterized in that** the depth (P) of such pleats (51) ranges between 2 and 10 cm.

## Patentansprüche

1. Fahrer-Airbagmodul für Automobile mit einem Sack (11) bestehend aus einer oberen Bahn (13) und einer unteren Bahn (15), die durch eine Umfangsnaht miteinander verbunden sind, welcher Sack sich unter der Zufuhr von Gas durch einen Gasgenerator ausdehnt, wenn das Fahrzeug einen Zusammenstoß erfährt, wobei entweder beide Bahnen (13, 15) oder nur die obere Bahn (13) einen oder mehrere Umfangsbereiche (21) mit Falten (51) aufweist, die derart ausgeführt sind, dass die Länge der Kontur im Wesentlichen gleich der anderen Bahn (13, 15) ist,
**dadurch gekennzeichnet, dass**
die obere Bahn (13) und die untere Bahn (15) eine runde Form aufweisen und dass die Falten (51) in dem einen oder den mehreren Umfangsbereichen (21) durch die Verbindung von Falzen (23) in Dreiecksform ausgebildet sind, wobei die Seitenwände (25) eine Länge (L) und eine Tiefe (P) aufweisen und die Falten (51) durch zusätzliche Nähte (27) gebildet sind, welche die Seitenwände (25) der Falzen (23) miteinander verbinden.

2. Fahrer-Airbagmodul für Automobile gemäß Anspruch 1, **dadurch gekennzeichnet, dass** das Verhältnis zwischen den Oberflächen der oberen und unteren Bahn (13, 15) vor der Bildung der Falten (51) zwischen 110% und 150% liegt.

3. Fahrer-Airbagmodul für Automobile gemäß einem der Ansprüche 1-2, **dadurch gekennzeichnet, dass** die Anzahl der Falten (51) in jeder Bahn (13, 15) zwischen 2 und 8 liegt.

4. Fahrer-Airbagmodul für Automobile gemäß einem der Ansprüche 1-3, **dadurch gekennzeichnet, dass** die Falten (51) eine radiale Ausrichtung sowie eine Länge (L) zwischen 5% und 20% des hypothetischen Radius aufweisen, der seine Ausrichtung festlegt.

5. Fahrer-Airbagmodul für Automobile gemäß einem der Ansprüche 1-4, **dadurch gekennzeichnet, dass** die Tiefe (P) dieser Falten (51) zwischen 2 und 10 cm liegt.

## Revendications

1. Module airbag conducteur pour automobile comprenant un sac (11), formé par un panneau supérieur (13) et un panneau inférieur (15) reliés par une couture périphérique, qui se gonfle en étant fourni en gaz par un générateur de gaz lorsque le véhicule subit une collision, dans lequel soit les deux panneaux (13, 15) soit seul le panneau supérieur (13) ont une ou plusieurs zones périphériques (21) avec des plis (51) configurés de sorte que la longueur du contour est substantiellement similaire à l'autre panneau (15, 13)
**caractérisé en ce que**
le dit panneau supérieur (13) et le dit panneau inférieur (15) sont de forme ronde et dans lequel les dits plis (51) dans une ou plus des dites zones périphériques (21) sont formés par des pliages reliés (23) de forme triangulaire avec des parois latérales (25) ayant une longueur (L) et une profondeur (P),
et les dits plis (51) étant formés par des coutures additionnelles (27) reliant les parois latérales (25) des pliages (23).

2. Module airbag conducteur pour automobile selon la revendication 1, **caractérisé en ce que** le ratio entre les surfaces des panneaux supérieurs et inférieurs (13, 15) avant le formage des plis (51) est compris entre 110% et 150%.

3. Module airbag conducteur pour automobile selon n'importe laquelle des revendications 1 à 2, **caractérisé en ce que** le nombre de plis (51) sur chaque panneau (13, 15) se situe entre 2 et 8.

4. Module airbag conducteur pour automobile selon n'importe laquelle des revendications 1 à 3, **caractérisé en ce que** les dits plis (51) ont une orientation radiale et une longueur (L) comprise entre 5% et 20% du rayon hypothétique que définit leur orientation.

5. Module airbag conducteur pour automobile selon n'importe laquelle des revendications 1 à 4, **caractérisé en ce que** la profondeur (P) de tels plis (51) est comprise entre 2 et 10 cm.
